**Europäisches Patentamt**

**European Patent Office**

**Office européen des brevets**

(19)

(11) Veröffentlichungsnummer: **0 035 085**

**B2**

(12) # NEUE EUROPÄISCHE PATENTSCHRIFT

(45) Veröffentlichungstag der neuen Patentschrift:
24.09.86

(21) Anmeldenummer: **80810137.2**

(22) Anmeldetag: **24.04.80**

(51) Int. Cl.⁴: **G 01 K 17/10, F 24 D 19/10**

(54) **Anlage zum Transport von Wärme mittels eines Fluides.**

(30) Priorität: **27.02.80 CH 1549/80**

(43) Veröffentlichungstag der Anmeldung:
**09.09.81 Patentblatt 81/36**

(45) Bekanntmachung des Hinweises auf die Patenterteilung:
**12.10.83 Patentblatt 83/41**

(45) Bekanntmachung des Hinweises auf die Entscheidung
über den Einspruch:
**24.09.86 Patentblatt 86/39**

(84) Benannte Vertragsstaaten:
**AT DE FR GB NL SE**

(56) Entgegenhaltungen:
**AT-B-307 668**
**DE-A-1 913 874**
**DE-A-2 216 464**
**FR-A-2 402 166**

**Richtlinien für Wärmemessung und**
**Wärmeabrechnung, VWEW Frankfurt, 2. Ausgabe**
**1977, S. 119-126**
**Technische Richtlinien für Hausanschlüsse an**
**Fernwärmenetze, VWEW Frankfurt, 4. Ausgabe**
**1975, S. 38. 43-45**

(73) Patentinhaber: **Aquametro AG, Murbacherstrasse 34, CH- 4013 Basel (CH)**

(72) Erfinder: **Mauerhofer, Alex, Birsmattstrasse 14, CH- 4106 Therwil (CH)**
Erfinder: **Inhelder, Jean- Jacques, Niederbergstrasse 27, CH- 4153 Reinach (CH)**

(74) Vertreter: **Eder, Carl E., Patentanwaltsbüro EDER AG Münchensteinerstrasse 2, CH- 4052 Basel (CH)**

EP 0 035 085 B2

## Beschreibung

Die Erfindung betrifft eine Anlage gemäss dem Oberbegriff des Anspruches 1.

Bei Warmwasserheizanlagen wird in einer Wärmequelle, zum Beispiel in einem Heizkessel oder in einem Wärmeaustauscher, Warmwasser erzeugt und einer Speise-Vorleuf-Leitung zugeführt, an die mehrere Wärmeverbraucher angeschlossen sind. Das Wermwasser gibt in den Wärmeverbrauchern Wärme ab und wird denn über Rücklauf-Leitungen einer Sammel-Rücklauf-Leitung zugeführt, von der es wieder in die Wärmequelle gelangt. Bei Fernheizungsanlagen oder bei andern Heizanlagen mit einer zentralen Wärmequelle wird dabei jeweils die Heizenergie, die verschiedenen Wärmeverbrauchern oder Wärmeverbraucher-Gruppen zugeführt wird, gemessen.

Zu diesem Zweck ist entweder in der von der Speise-Vorlauf-Leitung zum Wärmeverbraucher führenden Vorlauf-Leitung oder in der vom Wärmeverbraucher zur Sammel-Rücklauf-Leitung führenden Rücklauf-Leitung ein Durchflussmesser vorhanden. Ferner ist an einer geeigneten Stelle der Vor- und Rücklauf-Leitung je ein Temperaturfühler vorhanden. Die an den Wärmeverbraucher abgegebene Wärmeleistung ist dann proportional zum Produkt Durchflussmenge mal Temperaturdifferenz.

Ferner ist in der Vor- oder Rücklauf-Leitung des Wärmeverbrauchers ein Ventil vorhanden, das ermöglicht, die dem Wärmeverbraucher Zugeführte Wärmeleistung zu variieren. Bei einfachen Heizanlagen ist das Ventil manuell einstellbar.

Bei aufwendigeren Anlagen ist noch eine Steuer- oder Regel-Einrichtung vorhanden, um das Ventil in Abhängigkeit von Temperaturmesswerten zu steuern oder zu regeln. Es kann beispielsweise ein Temperaturfühler zum Messen der Aussentemperatur oder der Raumtemperatur vorhanden sein, der mit einem Steuergerät verbunden ist, das das Ventil in Abhängigkeit von der Aussenbzw. Raumtemperatur steuert.

Bei gewissen Typen von Anlagen wird für die Regelung noch die Vorlauf-Temperatur in der Zuleitung zum Wärmeverbraucher gemessen. Ferner wird von einem Sollwertgeber ein Sollwert für diese Vorlauf-Temperatur vorgegeben, wobei dieser Sollwert entweder konstant oder manuell einstellbar oder in Abhängigkeit von der gemessenen Aussen- oder Raumtemperatur festgelegt werden kann. Das Steuergerät weist dann Regelelemente auf, mit denen das Ventil so eingestellt wird, dass der gemessene Istwert der Vorlauf-Temperatur gleich dem vorgegebenen Sollwert wird.

Beim Betrieb einer Anlage von einer der vorstehend beschriebenen Arten wird dem Wärmeverbraucher von der Speise-Vorlauf-Leitung dauernd eine grössere oder kleinere Energiemenge zugeführt. Wenn die momentane, dem Verbraucher zugeführte Leistung auf einen relativ kleinen Wert eingestellt ist, wird auch der zur Ermittlung des Energieverbrauchs gemessene Wasser-Durchfluss verhältnismässig klein. Die verwendeten Durchflussmesser, bei denen es sich beispielsweise um Turbinenlaufrad-Durchflussmesser handeln kann, ergeben jedoch je nach Typ bei Durchflüssen, die unterhalb von etwa 1 bis 5 oder 10% ihres Nominal-Durchflusses liegen, relativ grosse Messfehler.

Wenn die momentane, dem Verbraucher zugeführte Wassermenge und damit die zugeführte Leistung relativ gross gemacht wird, kann die zur Ermittlung des Energieverbrauchs gemessene Temperaturdifferenz je nach den Grössen der übrigen Parameter verhältnismässig klein werden. Dann treten auch bei der Messung der Temperatur- Differenzen relativ grosse Fehler auf.

Bei kleineren Durchflussmengen und/oder Temperaturdifferenzen kann daher der gemessene Wärmeverbrauch beträchtlich vom tatsächlichen Wärmeverbrauch abweichen. Dies wirkt sich natürlich insbesondere dann sehr nachteilig aus, wenn sich solche Betriebszustände, bei denen die Durchflüsse und/oder die gemessenen Temperaturdifferenzen relativ kleine Werte haben, über längere Zeiträume erstrecken. Da nun beim Betrieb von Heizanlagen in den sogenannten Übergangszeiten während längeren Zeiträumen nur relativ kleine Heizleistungen benötigt werden, kann es vorkommen, dass sich während längeren Zeiträumen Betriebszustände ergeben, bei denen der Durchfluss und/oder die Temperaturdifferenz sehr klein ist. Dadurch können dann beträchtliche Messfehler entstehen.

Anlagen, die sowohl Wärmemess-Einrichrungen zum Ermitteln des Wärmeverbrauchs der Wärmeverbraucher als auch Regeleinrichtungen zum Einregeln der Vorlauf-Temperatur auf einen festen oder variablen Sollwert aufweisen, sind zudem relativ teuer. Die hohen Kosten werden teilweise dadurch verursacht, dass sowohl für die Wärmemessung als auch für die Steuerung und Regelung separate elektronische Geräte notwendig sind, die beträchtliche Kosten verursachen. Ferner sind sowohl für die Messung des Wärmeverbrauchs als auch für die Regelung relativ teure Temperaturfühler zum Messen der Wassertemperatur notwendig.

Ähnliche Probleme stellen sich nicht nur bei Heizanlagen, sondern auch bei Kühl-Anlagen, bei denen Wärme von den Wärmequellen verschiedener Benutzer zu einem zentralen Wärmeverbraucher transportiert wird.

Aus der deutschen Offenlegungsschrift 22 16 464 sind nun Einrichtungen miteinem Wärmezähler zur Erfassung des Wärmeverbrauchs bekannt. Die Wärmezähler weisen dabei zwei Temperaturfühler zum Messen der Vor- und der Rücklauftemperatur sowie einen Durchflussmesser auf. Ferner sind bei jeder Ausführungsvariante verschiedene Ventile und Mittel zu deren Steuerung und Regelung vorhanden.

In den Seiten 6 und 7 der zitierten Offenlegungsschrift ist angegeben, bei Wärmezählern für Einrohrheizungen werde der Fluid-Durchfluss derart geregelt, dass die mit dem Zähler erfasste Differenz zwischen der Vor- und Rücklauftemperatur innerhalb gewisser Regelgrenzen konstant bleibt. Des weitern ist angegeben, dass der Betrieb der Anlage bei Einrohrheizungen für eine gewisse Zeit unterbrochen wird, wenn ein vorgegebener Durchfluss unterschritten wird. Des weitern ist angegeben, bei Zweirohrheizungen werde die Anlage für eine gewisse Zeit stillgesetzt, wenn die vorgegebene Temperaturdifferenz unterschritten wird. Des weitern ist erwähnt, die Vorlauftemperatur werde bei Zweirohrheizungen derart geregelt, dass mit einem konstanten Durchfluss durch den Wärmezähler gearbeitet werden könne.

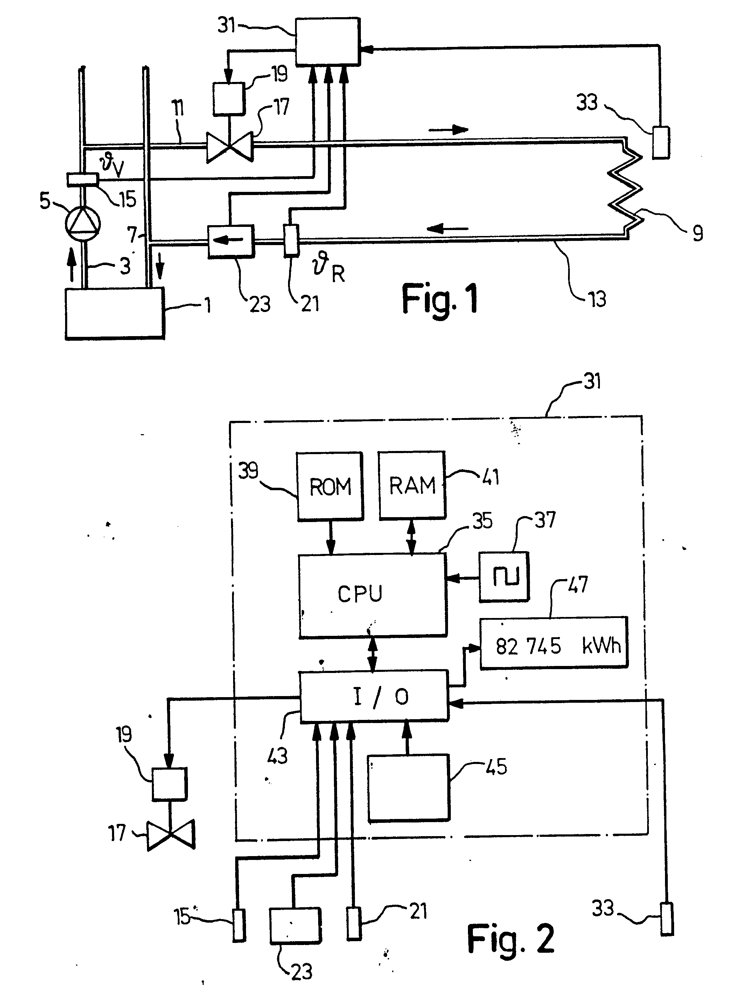

Eine der konkret in der zitierten Offenlegungsschrift beschriebenen und in der Fig. 2 dargestellte, eine Zweirohrheizung betreffende Anlage weist einen Wärmeverbraucher auf, dessen Wärmeverbrauch mit einem zwischen dem Wärmezähler und dem Verbraucher eingeschalteten, thermostatischen Ventil geregelt wird. Ferner sind drei dem Wärmezähler zugeordnete Ventile vorhanden, um den für diesen vorgesehenen, als optimal erachteten Betriebszustand einzustellen. Eines dieser Ventile ist als Mischventil ausgebildet und weist einen strömungsmässig vor dem Wärmezähler in die Vorlaufleitung eingeschalteten Durchgang oder Weg und einen Anschluss auf, durch den aus der Rücklaufleitung kommendes Fluid beigemischt werden kann. Das Mischventil wird durch einen Regler derart geregelt, dass der Durchfluss durch den Wärmezähler unabhängig von dem zum Einstellen des Wärmeverbrauchs dienenden, thermostatischen Ventils innerhalb gewisser Regelgrenzen konstant bleibt. In die Rücklaufleitung ist zwischen dem Verbraucher und dem Wärmezähler ebenfalls ein Ventil eingeschaltet, das durch einen Regler geschlossen wird, wenn die vom Wärmezähler erfasste Temperaturdifferenz unter einen vorgegebenen Wert sinkt. Schliesslich ist noch ein Ventil vorhanden, das den den Wärmezähler mit dem Wärmeverbraucher verbindenden Teil der Vorlaufleitung mit dem vom Wärmezähler zur Wärmequelle führenden Teil der Rücklaufleitung verbindet und dazu dienen soll, den Druck bei der Austrittstelle der Vorlaufleitung aus dem Wärmezähler ungefähr konstant zu halten.

Bei der in der Fig. 2 der deutschen Offenlegungsschrift 2216464 dargestellten Variante sind also zusätzlich zu dem zum Einstellen des Wärmeverbrauchs dienenden Ventil eine Vielzahl von ausschliesslich zum Einregeln eines günstigen Betriebszustandes für den Wärmezähler dienende Elemente, insbesondere drei Ventile erforderlich. Diese Ventile und auch die zu ihrer Installation notwendige Arbeit ergeben eine beträchtliche Erhöhung der Kosten.

Auch die übrigen Ausführungsvarianten, die in der deutschen Offenlegungsschrift 221 6464 anhand von Figuren erläutert sind, weisen zusätzlich zu den zum Einstellen des Wärmeverbrauchs dienenden Ventilen noch zusätzliche Ventile auf, die ausschliesslich dazu dienen, günstige Betriebsbedigungen für den Zähler festzulegen.

Es ist ferner aus dem Dokument "Technische Richtlinien für Hausanschlüsse an Fernwärmenetze", VWEW Frankfurt, 4. Ausgabe 1975, S.38, 43-45 (siehe insbesondere 4.2.3. Leistungsbegrenzung) bekannt, den Istwert des Wärmeflusses von einer Wärmequelle aus den Meßwerten zweier Temperaturfühler und eines Durchflußmessers zu bestimmten und den Wärmefluß durch diesen Istwert mittels eines Ventils zu regeln.

Die Erfindung hat sich nun zur Aufgabe gestellt, eine Anlage der einleitend genannten Art zu schaffen, bei der der Wärmetransport zum oder vom Wärmegerät eines Benutzers eingestellt und auch dann genau ermittelt werden kann, wenn die Wärmeleistung nur einen kleinen Teil der vorgesehenen Nominal-Wärmeleistung beträgt. Diese Aufgabe wird nach der Erfindung durch eine Anlage gelöst, die gemäss dem Anspruch 1 ausgebildet ist.

Zweckmässige Ausgestaltungen der Erfindung ergeben sich aus den abhängigen Ansprüchen.

Es sei hier noch eine Bemerkung zu den in den Ansprüchen verwendeten Begriffen "Wärmequelle" und "Wärmeverbraucher" eingefügt.

Bei der erfindungsgemässen Anlage handelt es sich vorzugsweise um eine Heizanlage. Die Wärmequelle kann dann durch einen Heizkessel gebildet werden, in dem das zum Wärmetransport dienende Wasser aufgeheizt wird. Wenn diese Anlage zur Wärmeversorgung eines Mehrfamilienhauses oder einer Siedlung mit einigen Häusern dient, wird das im zentralen Heizkessel erzeugte Warmwasser üblicherweise direkt den Heizungsradiatoren oder den Lufterhitzern der Warmluftheizungen zugeführt. Es wird dann beispielsweise für jede angeschlossene Wohnung ein Wärmezähler vorgesehen, der den Wärmeverbrauch der sich in der betreffenden Wohnung befindenden Heizungsradiatoren oder Lufterhitzer misst. In diesem Fall werden also die Wärmeverbraucher unmittelbar durch die Heizungsradiatoren oder Lufterhitzer gebildet. Bei Fernheizungsanlagen, bei denen ganze Städte von der gleichen Heizzentrale aus mit Warmwasser versorgt werden, ist üblicherweise der Wasserkreislauf der Heizzentrale vom Wasserkreislauf der Verbraucher getrennt. Es ist dann für jedes zu beheizende Gebäude oder eventuell für jede Wohnung ein Wärmeaustauscher vorhanden, in dem die von der Fernheizzentrale gelieferte Wärme auf den haus- oder wohnungsinternen Wasserkreislauf übertragen wird. Es wird dann üblicherweise der Wärmeverbrauch des Warmeaustauschers gemessen, so dass also in diesem Fall unter dem Wärmeverbraucher ein Wärmeaustauscher zu verstehen ist.

Die erfindungsgemässe Anlage konnte jedoch auch zum Kühlen oder zum wahlweisen Kühlen und Heizen konzipiert werden, wie dies beispielsweise bei Klima-Anlagen der Fall ist. Unter diesen Umständen kann die Wärmequelle beispielsweise durch einen Kühler, der der Umgebungsluft Wärme entzieht, gebildet werden. Diese Wärme wird dann vom Fluid zum Wärmeverbraucher transportiert, der nun durch eine Kühlapparatur gebildet ist. Bei einer solchen Anlage können mehrere Kühler, d.h. Wärmequellen, mit einer gemeinsamen Kühlpparatur, d. h. einem Wärmeverbraucher, verbunen sein. Dabei stellt sich dann das Problem, die von den verschiedenen Wärmequellen zum gemeinsamen Verbraucher transportierte Wärme zu messen.

Beim Betrieb der erfindungsgemässen Anlage wird der Wärmefluss unterbrochen, wenn der gemessene Durchfluss auf einen unteren Grenzwert absinkt, der vorgängig entsprechend der Genauigkeit des verwendeten Durchflussmessers festgelegt wurde.

Bei einer vorteilhaften Ausgestaltung der Erfindung wird insbesondere der Durchfluss mit dem steuerbaren Ventil derart begrenzt, dass die zur Ermittlung des Energieverbrauchs gemessene Temperaturdifferenz nie unter einen vorgegebenen Grenzwert absinkt, der entsprechend der Genauigkeit der verwendeten Temperaturfühler und der Messelektronik festgelegt ist.

Wenn die erfindungsgemässe Anlage mit einer automatischen Steuer- oder Regeleinrichtung kombiniert oder ausgestattet wird, kann man bei einer vorteilhaften Ausgestaltung der Erfindung gewisse Elektronik-Teile und/oder Temperaturfühler sowohl für die Ermittlung des Wärmeverbrauchs als auch für die Steuerung oder Regelung verwenden. Für Einzelheiten sei hierzu auf die nachfolgende Beschreibung spezieller Ausführungsbeispiele verwiesen. Eine solche Kombination oder Doppelverwendung gewisser Bauteile ermöglicht, komplexe Anlagen verhältnismässig kostengünstig herzustellen.

Die Erfindung soll nun anhand in der Zeichnung dargestellter Ausführungsbeispiele näher erläutert werden. In der Zeichnung zeigen:

die Fig. 1 ein Schema einer Heizanlage mit einem Wärmeverbraucher, der über ein Durchgangs-Ventil gesteuert wird,

die Fig. 2 ein Blockschema eines Gerätes zum Bestimmen der zum Wärmeverbraucher transportierten Wärme und zum Regeln des Ventils,

die Fig. 3 ein Diagramm zur Veranschaulichung der verbotenen Betriebszustände,

die Fig. 4 ein Schema einer Heizanlage mit einem Wärmeverbraucher, der durch Rücklaufbeimischung gesteuert wird, und

die Fig. 5 ein Schema einer Heizanlage mit einem Wärmeverbraucher, der durch eine Einspritzschaltung gesteuert wird.

Die in der Fig. 1 ersichtliche Heizanlage weist eine Heizzentrale mit einem Wasserheizkessel auf, der eine Wärmequelle 1 bildet, an die eine Speise-Vorlauf-Leitung 3 mit einer Umwälzpumpe 5 und eine Sammel-Rücklauf-Leitung 7 angeschlossen ist. Von der Speise-Vorlauf-Leitung 3 zweigt nach der Umwälzpumpe 3 eine zum Eingang eines Wärmeverbrauchers 9 führende Vorlauf-Leitung 11 ab. Der Ausgang des Wärmeverbrauchers 9 ist durch eine Rücklauf-Leitung 13 mit der Sammel-Rücklauf-Leitung 7 verbunden.

Im vorliegenden Fall wird angenommen, dass der Wärmeverbraucher 9 durch einen Heizungsradiator oder eine Gruppe von Heizungsradiatoren eines Gebäudes oder einer Wohnung gebildet ist. Er könnte jedoch auch durch einen Wärmeaustauscher gebildet sein, dessen Primärteil an die Leitungen 11 und 13 angeschlossen ist und dessen Sekundärteil dann seinerseits mit Heizungsradiatoren oder dergleichen verbunden ist.

Ein Temperaturfühler 15 ist strömungsmässig kurz vor der Abzweigungsstelle in die Sammel-Vorlauf-Leitung 3 eingebaut. In die Vorlauf-Leitung 11 ist ein Durchgangs-Regulier-Ventil 17 mit einem Antrieb, beispielsweise einem einen Elektromotor aufweisenden Betätigungsorgan 19 eingeschaltet. In die Rücklauf-Leitung 13 sind ein Temperaturfühler 21 und ein Durchflussmesser 23 eingeschaltet.

Die beiden Temperaturfühler 15, 21 weisen einen als Messwandler dienenden Platinwiderstand auf. Der Durchflussmesser 23 ist mit einer Messkammer versehen, in der ein Turbinenlaufrad angeordnet ist, das beim Betrieb vom durchströmenden Wasser gedreht wird. Das Turbinenlaufrad ist mittels einer Magnetkupplung durch eine dicht schliessende Kammerwand hindurch mit einem Impulsgeber verbunden, der beispielsweise einen Magnet aufweisen kann, der an einem Reed-Kontakt vorbeibewegt wird.

Es ist noch ein Gerät 31 vorhanden, das Eingänge aufweist, die durch elektrische Leitungen mit den Temperaturfühlern 16, 21 und dem Durchflussmesser 23 verbunden sind. Des weitern ist noch ein ausserhalb der Wasser-Leitungen angeordneter Temperaturfühler 33 vorhanden, der beispielsweise die Luft-Temperatur im Raum, in dem sich der den Wärmeverbraucher bildende Heizungsradiator befindet, oder auf der Aussenseite des Gebäudes misst. Der Temperaturfühler 33 ist durch eine elektrische Leitung mit einem Eingang des Gerätes 31 verbunden. Ein Ausgang des Gerätes 31 ist durch eine elektrische Leitung mit dem Betätigungsorgan 19 verbunden.

Der Aufbau des Gerätes 31 ist stark vereinfacht in der Fig. 2 dargestellt. Das Gerät enthält einen Mikroprozessor, der im wesentlichen durch eine Zentraleinheit (Central Processing Unit CPU) 35 gebildet und mit einem Taktgeber 37 verbunden ist. Die Zentraleinheit 35 ist ferner mit einem festprogrammierten Programmspeicher (Real Only Memory ROM) 39 und einem Arbeitsspeicher (Random Access Memory RAM) 41 verbunden. Des weitern ist eine Eingabe/Ausgabe-Einheit (In/Out Unit 1/0) 43 vorhanden, die das Verbindungsglied von der Zentraleinheit 35 zu den externen Elementen, d.h. den Temperaturfühlern 15, 21, 33, dem Durchflussmesser 23 sowie dem Ventilbetätigungsorgan 19 bildet. An die Eingabe/ Ausgabe-Einheit 43 ist auch noch ein Festwertgeber 45 angeschlossen, der manuell einstellbare Einstellorgane zum Einstellen verschiedener Festwerte aufweist. An die Eingabe/Ausgabe-Einheit ist noch eine Anzeige-Einheit 47 angeschlossen.

An die Speise-Vorlauf-Leitung 3 und die Sammel-Rücklauf-Leitung 7 sind noch weitere Verbraucher angeschlossen, für die ebenfalls Elemente zum Bestimmen und Regeln des Wärmeverbrauchs vorhanden sind.

Im folgenden soll nun die Arbeitsweise der Anlage erläutert werden.

Beim Betrieb wird in der Wärmequelle 1 heisses Wasser mit einer Temperatur von typischerweise 70-90°C erzeugt und mittels der Pumpe 5 umgewälzt, so dass es in den durch Pfeile angedeuteten Richtung durch die Leitungen 3 und 7 strömt und also einen Kreislauf ausführt. Wenn das Ventil 17 ganz oder teilweise offen ist, strömt auch Wasser durch die Leitungen 11 und 13 sowie den Wärmeverbraucher 9 und gibt im letzteren Wärme ab. Diese verbrauchte, d.h. dem Wasser entzogene Wärme wird nun mittels der Temperaturfühler 15 und 21, des Durchflussmessers 23 und des Gerätes 31 ermittelt. Im folgenden bezeichnen $\vartheta_v$ die Vorlauf-Temperatur des Wassers beim Temperaturfühler 15, $\vartheta_R$ die Rücklauf-Temperatur des Wassers beim Temperaturfühler 21, V das Volumen des Wassers, das durch den Durchflussmesser hindurchgeströmt ist, p die Dichte des Wassers bei der Rücklauf-Temperatur $\vartheta_R$ und $c_p$ die spezifische Wärme bei konstantem Druck und beim Mittelwert aus der Vor- und Rücklauf-Temperatur. Der Durchfluss durch den Durchflussmesser, d.h. die pro Zeiteinheit durch den Durchflussmesser stromende Wassermenge kann entweder als Anzahl Volumeneinheiten pro Zeiteinheit oder als Anzahl Masse-Einheiten pro Zeiteinheit angegeben werden. Im folgenden wird unter q der in Volumeneinheiten pro Zeiteinheit gemessene Durchfluss verstanden. Des weitern sei $\Delta\vartheta$ die Differenz zwischen der Vorlauf- und der Rücklauf-Temperatur, so dass also gilt,

$$\Delta\vartheta = \vartheta_v - \vartheta_R \quad (1)$$

Ferner werde die dem Wärmeverbraucher 9 durch das Wasser von der Wärmequelle 1 zugeführte Wärmemenge mit E bezeichnet. Im Fall, dass die Vor- und Rücklauftemperatur zeitlich konstant blieben, gälte die Beziehung:

$$E = Vpc_p\Delta\vartheta \quad (2)$$

In der Praxis sind jedoch die Temperaturen variabel. Die Energie ist daher durch Integration über die Zeit oder näherungsweise durch Summation über endliche Zeitintervalle zu berechnen.

Nun soll der Begriff "Wärmefluss s" definiert werden. Unter dem Wärmefluss s wird im folgenden diejenige Wärmemenge verstanden, die pro Zeiteinheit von der Wärmequelle 1 zum Wärmeverbraucher 9 transportiert wird. Wenn man unter $\Delta t$ ein Zeitintervall und unter $\Delta E$ die dem Wärmeverbraucher während dieses Zeitintervalls zugeführte Wärmemenge versteht, so kann der momentane Wärmefluss dargestellt werden durch die Gleichung:

$$s = \Delta E/\Delta t \quad (3)$$

Der Wärmefluss s ist dabei gegeben durch die Beziehung:

$$s = pc_p\Delta\vartheta q \quad (4)$$

Die gesamte, dem Wärmeverbraucher in einem bestimmten Zeitraum zugeführte Energie ergibt sich durch Integration über die Zeit und kann bei endlichen Zeitintervallen näherungsweise durch eine Summation über diese ermittelt werden. Die Energie kann also näherungsweise dargestellt werden durch den Ausdruck:

$$E = \Sigma pc_p\Delta q\Delta t \quad (5)$$

Die beiden Temperaturfühler 15 und 21 liefern elektrische Signale, die die Vor- und Rücklauf-Temperatur in analoger Form darstellen. Diese Signale werden in der Eingabe/Ausgabe-Einheit 43 in Digitalsignale umgewandelt und der Zentraleinheit 35 zugeführt. Jeder der vom Durchflussmesser 23 gelieferten Impulse entspricht einem bestimmten Wasservolumen und gibt also ein Mass für das Produkt $q\Delta t$. Diese Impulse werden von der Eingabe/Ausgabe-Einheit 43 in eine Form gebracht, in der sie von der Zentraleinheit verarbeitet werden können und ebenfalls der Zentraleinheit zugeführt.

Die Zentraleinheit 35 berechnet dann gemäss einem im Programmspeicher 39 gespeicherten Programm und unter Benutzung des Arbeitsspeichers 41 die durch die Formel 2 bzw. 5 gegebene Wärme-Energie E. Die zur Berechnung noch erforderlichen Parameter sind ebenfalls im Programmspeicher 39 gespeichert und werden aus diesem herausgelesen. Die verbrauchte Wärme wird dann fortlaufend von der Anzeige-Einheit 47 angezeigt. Selbstverständlich kann auch eine Fernanzeige vorgesehen werden, so dass die verbrauchte Wärme zu einer für mehrere Wärmeverbraucher gemeinsamen Rechen- und Anzeige-Einheit übermittelt wird.

Als nächstes soll das Grund-Prinzip der Steuerung bzw. Regelung des Wärmeverbrauchs und deren Verknüpfung mit der Messung des Wärmeverbrauchs erläutert werden. Der Temperaturfühler 33 misst, wie bereits erwähnt entweder die Luft-Temperatur im Raum, in dem sich der den Wärmeverbraucher bildende Heizungsradiator befindet, oder die Luft-Temperatur ausserhalb des Gebäudes. Das vom Temperaturfühler 33 erzeugte, elektrische Analogsignal wird dann durch die Eingabe/Ausgabe-Einheit 43 in ein von der Zentraleinheit 35 verarbeitbares Digitalsignal umgewandelt. Die Zentraleinheit 35 berechnet nun gemäss einem im Programmspeicher gespeicherten Programm und eventuell unter Benutzung von Parameterwerten, die mittels eines manuell einstellbaren Einstell-Elementes des Festwertgebers 45 einstellbar und in die Zentraleinheit eingebbar sind, von der gemessenen Luft-Temperatur abhängige Sollwerte für die dem Wärmeverbraucher 9 pro Zeiteinheit zuzuführende Wärmemenge, d.h. einen Soll-Wärmefluss. Ferner wird aus den mit den Temperaturfühlern 15 und 21 und dem Durchflussmesser 23 gemessenen Messwerten gemäss der Formel 3 oder 4 der momentane Istwert des Wärmeflusses s berechnet. Die Zentraleinheit vergleicht dann den Sollwert und den Istwert des Wärmeflusses miteinander und berechnet daraus einen Stellwert für das Ventil 17. Dieser Stellwert wird dann der Eingabe/Ausgabe-Einheit 43 zugeführt, die ein entsprechendes Signal erzeugt und dem Betätigungsorgan 19 des Ventils 17 zuführt. Der Wasser- Durchfluss durch den Wärmeverbraucher 9 und den Durchflussmesser 23 wird also im Prinzip so geregelt, dass der sich ergebende Istwert des Wärmeflusses gleich dem aufgrund der Luft-Temperatur berechneten Sollwert wird. Wie jedoch noch erläutert wird, arbeitet die Regelung nur dann in dieser Weise, wenn der Wärmefluss eine gewisse Mindestgrösse hat.

Nun seien einige Bemerkungen zu den Messchrakteristiken der verwendeten Durchflussmesser und Temperaturfühler eingefügt. Die verwendeten Temperaturfühler sind vorzugsweise, wie bereits erwähnt, mit als Messwandler dienenden Platinwiderständen versehen. Je nach der Qualität der verwendeten Platinwiderstände und der in der Eingabe/Ausgabe- Einheit 43 vorhandenen Mess-Schaltungen und Analog/Digitalwandler kann man Temperaturdifferenzen bis zu einem unteren Grenzwert $\Delta\vartheta_{min}$ von etwa 1 bis 5°C hinunter genau messen. Für die Durchflussmesser wird vom Hersteller üblicherweise ein Nominal-Durchfluss angegeben, d.h. die maximale Durchflussmenge pro Zeiteinheit, die im Dauerbetrieb zulässig ist. Dabei ist es im allgemeinen zulässig, dass der momentane Durchfluss q den Nominal-Durchfluss vorübergehend während gewisser Zeitintervalle überschreitet. Es kann beispielsweise bei Durchflussmessern mit einem Turbinenlaufrad zulässig sein, dass der Durchfluss q während eines zusammenhängenden Zeitintervalls von 1 Stunde die doppelte Grösse des Nominal-Durchflusses hat, ohne dass der Durchflussmesser dadurch beschädigt wird. Dieser während einer bestimmten, beschränkten Zeitdauer zulässige Durchfluss wird häufig ebenfalls angegeben und als Maximal-Durchfluss bezeichnet. Wenn der Durchfluss unter einen unteren Grenzwert $q_{min}$ sinkt, der je nach Durchflussmesser-Typ etwa bei 1 bis 5% des Nominal- Durchflusses oder bei gewissen, verhältnismässig billigen Durchflussmessern unterhalb 10% oder sogar 20% des Nominal-Durchflusses liegt, treten relativ grosse Messfehler auf.

Wie noch erläutert wird, werden daher Massnahmen getroffen, dass der Durchfluss q und die Temperaturdifferenz $\Delta\vartheta$ beim Messen des Wärmeverbrauchs nie unter einen vorgegeben, unteren Grenzwert $q_{min}$ bzw. $\Delta\vartheta_{min}$ absinken. Diese vorgegebenen, unteren Grenzwerte werden entsprechend den Messcharakeristiken der verwendeten Temperaturfühler und des Durchflussmessers derart festgelegt, dass nie Betriebszustände auftreten, bei denen grosse Messfehler entstehen. Diese unteren G renzwerte können entweder fest in den Programmspeicher 39 programmiert sein oder aber mittels der Betätigungsorgane des Festwertgebers 45 eingestellt werden.

Der untere Grenzwert $q_{min}$ für den Durchfluss wird etwa auf ungefähr oder mindestens 1% und höchstens 5 oder 10% oder eventuell höchstens 20% des Nominal- Durchflusses des verwendeten Durchflusszählers festgelegt. Der untere Grenzwert $\Delta\vartheta_{min}$ für die Differenz zwischen der Vor- und Rücklauf-Temperatur kann beispielsweise auf ungefähr oder mindestens 1°C und höchstens oder ungefähr 5°C festgelegt werden.

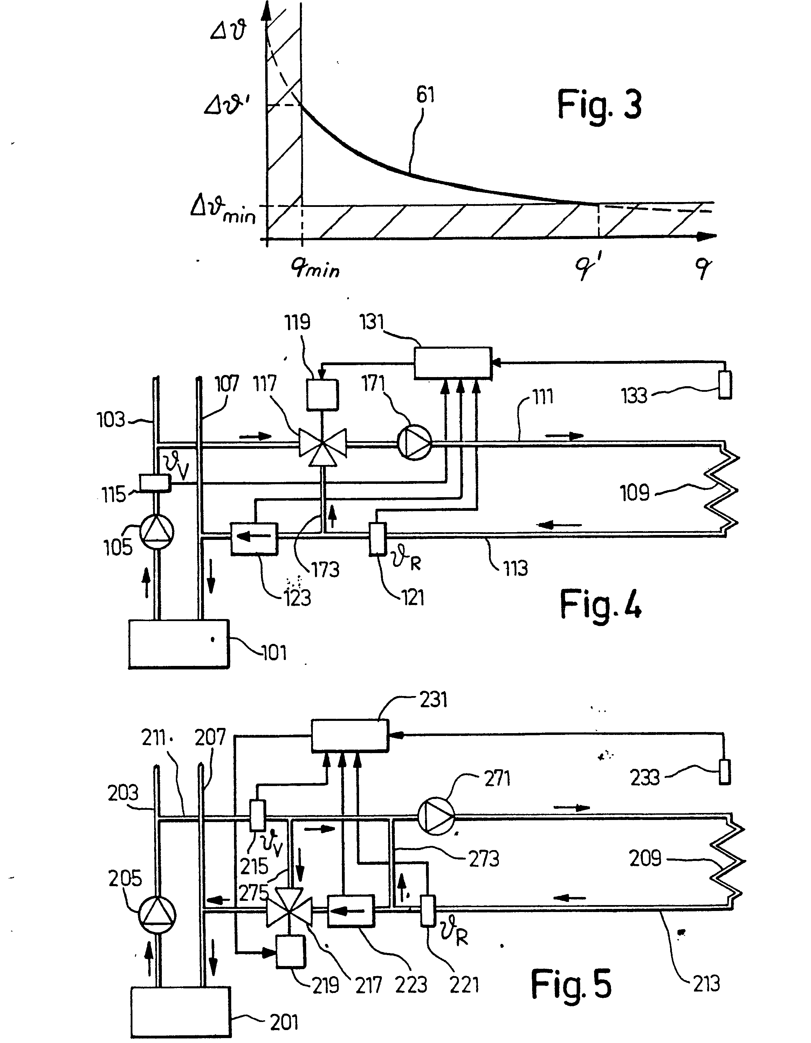

In dem in der Fig. 3 dargestellten Diagramm ist auf der Abszisse der Wasser-Durchfluss q und auf der Ordinate die Temperaturdifferenz $\Delta\vartheta$ aufgetragen. Ferner sind auch noch untere Grenzwerte $\Delta\vartheta_{min}$ und $q_{min}$ angegeben, unterhalb denen relativ grosse Messfehler auftreten. Beim Betrieb sollen daher Betriebszustände, die im schraffierten Bereich des Diagramms liegen, durch noch zu erläuternde Massnahmen vermieden werden.

Der Zusammenhang zwischen den Grössen q und $\Delta\vartheta1$ hängt von der Ausbildung des Wärmeverbrauchers, der Vorlauf-Temperatur, der Stromungsgeschwindigkeit und der Umgebungstemperatur des Raumes ab, in dem sich der Wärmeverbraucher befindet. Für den Fall, dass die Differenz zwischen der Vorlauf-Temperatur $\vartheta_v$ und der Umgebungs-Temperatur im beheizten Raum konstant ist, wird der Zusammenhang qualitativ durch die Kurve 61 wiedergegeben. Die Kurve 61 schneidet die Gerade $q = q_{min}$ in einem Punkt, bei dem $\Delta\vartheta$ den Wert $\Delta\vartheta'$ hat. Der Wärmefluss hat an diesem Punkt den bei den fest vorgegebenen Parametern möglichen Minimalwert $s_{min}$, der gegeben ist durch die Beziehung:

$$s_{min} = q_{min} \rho c_p \Delta\vartheta' \quad (6)$$

Mit zunehmendem Durchfluss q nimmt die Temperaturdifferenz ab, so dass die Kurve 61 die Gerade $\Delta\vartheta = 4\vartheta_{min}$ in einem Punkt schneidet, bei dem q den Wert q' hat. Der Wärmefluss s hat an diesem Punkt den bei den fest vorgegebenen Parametern möglichen Maximalwert $s_{min}$, der gegeben ist durch die Beziehung

$$s_{max} = q'\rho c_p \Delta\vartheta_{min} \quad (7)$$

Wie erläutert wurde, kann der Wärmeverbrauchmittels des Ventils 17 gesteuert oder geregelt werden. Wenn der Wärmebedarf relativ klein ist, wird, wie aus der Diskussion der Fig. 3 hervorgeht, auch der vom Durchflussmesser 23 gemessene Durchfluss q relativ klein. Das im Programmspeicher 39 gespeicherte Programm ist nun derart beschaffen, dass das Ventil 17 den Wasserzufluss von der Wärmequelle 1 zum Wärmeverbraucher 9 vorübergehend vollständig unterbricht, wenn ein Betriebszustand auftritt, bei dem der Durchfluss q unter einen vorgegebenen, unteren Grenzwert $q_{min}$ absinkt.

Bei der Regelung können nun Zustände auftreten, bei denen der berechnete Sollwert für den Wärmefluss einem Punkt der Kurve 61 entspricht, für den der Durchfluss q kleiner wäre als der vorgängig festgelegte untere Grenzwert $q_{min}$. In diesem Fall kann der Istwert des Wärmeflusses nicht auf den Sollwert eingeregelt werden, weil ja eben das Ventil 17 so gesteuert wird, dass es den Wasser-Durchfluss in diesem Fall vollständig sperrt. Das Rechen-Programm, gemäss dem der Regelvorgang abläuft, ist nun derart beschaffen, dass der Wärmefluss unter diesen Umständen intermittierend erfolgt. Das Ventil 17 wird also abwechselnd während eines gewissen Zeitintervalls ganz geschlossen und wieder geöffnet.

Der Istwert des Wärmeflusses s hat beim intermittierenden Betrieb abwechselnd während eines gewissen Zeitintervalls den Wert Null und während eines gewissen Zeitintervalls einen endlichen Wert. Wenn man den Istwert über einen Zeitraum mittelt, der mehrere solcher Ein/Aus-Zeitintervalle umfasst, ergibt sich ein mittlerer Istwert des Wärmeflusses, der dem Sollwert entspricht, der bei einer kontinuierlichen Wärmezufuhr eingeregelt werden sollte.

Die Temperaturfühler erfassen die Temperaturänderungen wegen ihrer eigenen Wärmekapazität nur mit einer gewissen Verzögerung. Die Regelung muss daher unter Berücksichtigung dieser Messverzögerungen konzipiert werden. Das Programm für die Regelung ist daher insbesondere derart ausgelegt, dass die Frequenz, mit der sich das Ventil bei der intermittierenden Wärmezufuhr öffnet und schliesst, nicht so gross wird, dass die erwähnten Messverzögerungen ins Gewicht fallende Fehler in der Wärmemessung oder Instabilitäten verursachen. Dies kann beispielsweise dadurch erzielt werden, dass man im Regel-Programm eine künstliche Verzögerung vorsieht, so dass das Ventil beim intermittierenden Betrieb mindestens immer 3 Minuten und vorzugsweise 5 Minuten offen oder geschlossen ist.

Statt direkt eine zeitliche Verzögeru ng in das Regel-Programm einzubauen, kann man das Regel-Programm jedoch auch derart ausbilden, dass das Ventil nach einem Unterbruch des Durchflusses erst wieder geöffnet wird, wenn der aufgrund der Luft-Temperatur errechnete Sollwert für den Wärmefluss s so gross geworden ist, dass der sich für den Wasser-Durchfluss q ergebende Sollwert dann mindestens um einen gewissen Betrag grösser ist als der vorgegebene, untere Grenzwert $q_{min}$ bei dem die Wärmezufuhr unterbrochen worden war.

Bei der Regelung könnten nun aber Zustände auftreten, bei denen der Soll-Durchfluss so gross würde, dass die Temperaturdifferenz $\Delta\vartheta$ unter den vorgegebenen Grenzwert $\Delta_{min}$ fallen würde. Das im Programmspeicher 39 gespeicherte Programm ist nun derart beschaffen, dass der Durchfluss q in diesem Fall auf den sich bei den gerade vorhandenen Parametern ergebenden Wert q' begrenzt wird, bei dem die Temperaturdifferenz auf den untern Grenzwert $\Delta\vartheta_{min}$ abgesunken ist. Es sei dabei ausdrücklich darauf hingewiesen, dass q' keine Konstant ist, sondern bei einem fest vorgegebenen, untern Temperaturdifferenz-Grenzwert $\Delta\vartheta_{min}$ von variablen Grössen, wie etwa der Vorlauf-Temperatur $\vartheta_v$, abhängig ist. Wenn also ein Zustand auftritt, bei dem der zur Deckung des Wärmebedarfs erforderliche Durchfluss q grösser würde als q', wird der Istwert des Wärmeflusses s auf einen unterhalb des Sollwerts liegenden Wert begrenzt. Die Anlage zweckmässigerweise derart dimensioniert, dass derartige Zustände nie oder höchstens relativ selten auftreten.

Die Anlage kann auch derart konzipiert werden, dass der Sollwert für den Wärmefluss s zum Wärmeverbraucher 9 nicht nur von einer gemessenen Luft-Temperatur, sondern von Messwerten abhängt, die von verschiedenen Temperaturfühlern geliefert werden. Man kann beispielsweise die Luft-Temperatur in verschiedenen Räumen des Gebäudes oder sowohl die Temperatur im Innern des Gebäudes als auch ausserhalb von diesem messen. In diesen Fällen würde dann das Rechenoder Regel-Programm derart ausgebildet, dass die verschiedenen Temperaturwerte in irgend einer geeigneten Weise miteinander kombiniert würden.

Es kann aber auch vorgesehen sein, dass das Ventil gemäss einem gewissen zeitlichen Programm geregelt wird und dass beispielsweise der Wärmefluss während der Nacht anders eingestellt wird als am Tag. Auch bei solchen Anlagen konnen Betriebszustände auftreten, bei denen der Wasser-Durchfluss q oder die Temperatur-Differenz $\Delta\vartheta$ die vorgesehenen Grenzwerte unterschreiten. Das Ventil wird daher auch bei solchen Anlagen mit einem elektrischen Betätitungsorgan ausgerüstet und durch den Prozess- Rechner des Gerätes zum Ermitteln des Wärmeverbrauchs gesteuert. Der Prozess-Rechner wird dann so konzipiert, dass die Wärmezufuhr bei Betriebszuständen, bei denen der vorgegebene Durchfluss-Grenzwert $q_{min}$ unterschritten würde, intermittierend erfolgt und dass der Durchfluss nach oben derart begrenzt wird, dass der vorgesehene, untere Grenzwert

$\Delta\vartheta_{min}$ der Temperaturdifferenz nie unterschritten wird.

Nun sollen anhand der Fig. 4 und 5 noch zwei Varianten der Anlage erläutert werden, bei denen das Wasser in den Wärmeverbrauchern auch dann umgewälzt wird, wenn kein Wärmetransport von der Wärmequelle zu den Wärmeverbrauchern stattfindet, d.h. wenn der Wärmefluss s den Wert Null hat.

Die Fig. 4 zeigt eine Heiz-Anlage mit einer Wärmequelle 1 01, einer Speise-Vorlauf- Leitung 103, einer Pumpe 105 und einer Sammel-Rücklauf-Leitung 107. Ein Wärmeverbraucher 109 oder eine Gruppe von Wärmeverbrauchern ist über eine Vorlauf-Leitung 111 mit der Speise-Vorlauf-Leitung 103 und über eine Rücklauf-Leitung 113 mit der Sammel-Rücklauf-Leitung 107 verbunden. Ein Temperaturfühler 115 ist zum Messen der Vorlauf-Temperatur $\vartheta_V$ vor der Abzweigung der Vorlauf-Leitung 111 in die Sammel-Vorlauf-Leitung 103 eingeschaltet. In die Rücklauf-Leitung 113 ist ein Temperaturfühler 121 zum Messen der Rücklauf-Temperatur $\vartheta_R$ und ein Durchflussmesser 123 eingebaut, wobei der letztere strömungsmässig nach dem Temperaturfühler 121 angeordnet ist. In die Vorlauf-Leitung 111 ist ein Dreiweg- Regulier-Ventil 117 mit einem einen Elektromotor aufweisenden Betätigungsorgan 119 eingebaut. In die Vorlauf-Leitung 111 ist zwischen dem Ventil 117 und dem Wärmeverbraucher 109 noch eine Pumpe 171 eingeschaltet. Der zwischen dem Temperaturfühler 121 und dem Durchflussmesser 123 vorhandene Abschnitt der Rücklauf-Leitung 113 ist durch eine Leitung 173 mit dem Dreiweg-Ventil 117 verbunden Ferner können nötigenfalls nicht dargestellte Drosseln in gewisse Leitungen eingeschaltet sein. Ein Gerät 131 ist durch elektrische Leitungen mit den beiden Temperaturfühlern 115 und 121, dem Durchflussmesser 123 sowie einem zum Messen der Luft-Temperatur dienenden Temperaturfühler 133 verbunden.

Beim Betrieb der Anlage hält die Pumpe 105 dauernd eine Kreislauf-Strömung des in der Wärmequelle 101 erwärmten Wassers aufrecht. Ferner hält die Pumpe 171 unabhängig von der Stellung des Ventils 117 dauernd einen ungefähr konstanten Wasserstrom durch den Wärmeverbraucher 109 aufrecht. Im Dreiweg-Regulier-Ventil 117 wird Wasser aus der Speise-Vorlauf-Leitung 103 mit im Wärmeverbraucher abgekühltem Wasser aus der Rücklauf- Leitung 1 13 vermischt. Das Wasser strömt dabei jeweils in der Richtung der eingezeichneten Pfeile, wobei aber die Strömungen in gewissen Leitungsabschnitten bei bestimmten Ventil-Stellungen gesperrt werden. Der Wasser-Zufluss von der Speise-Vorlauf-Leitung 103 zur Pumpe 171 ist bei jeder Ventil-Stellung gleich dem Wasser-Durchfluss q durch den Durchflussmesser 123 hindurch. Die Grösse des Wärmetransportes von der Wärmequelle 101 zum Wärmeverbraucher 109, d.h. der Wärmefluss s, wird also hier durch Andern des Mischverhältnisses von Vor- und Rücklauf-Wasser eingestellt. Dieses Verfahren zum Einstellen des Wärmeflusses wird im Heiz-Anlagenbau als Rücklaufbeimischung bezeichnet.

Das Gerät 131 ist ähnlich ausgebildet wie das Gerät 31 und arbeitet auch ähnlich wie dieses. Der im Gerät 131 enthaltene Prozess-Rechner zum Messen und Regeln des Wärmeverbrauchs ist insbesondere derart programmiert, dass die Zufuhr von Wasser aus der Speise-Vorlauf-Leitung 103 zeitweise ganz unterbrochen wird, wenn sich aufgrund der Regelung ein Betriebzustand ergäbe, bei dem der Wasser-Durchfluss q durch den Durchflussmesser unter einen vorgegebenen Grenzwert absänke. Des weitern ist das Gerät 131 derart konzipiert, dass der Durchfluss nie Werte übersteigt, bei denen die Temperaturdifferenz unter den vorgegebenen, untern Grenzwert sinkt. Wenn der Wasserzufluss von der Speise-Vorlauf-Leitung 103 unterbrochen bzw. begrenzt wird, werden auch der Wärmefluss von der Wärmequelle 101 zum Wärmeverbraucher 109 und der Wasser-Durchfluss q durch den Durchflussmesser unterbrochen bzw. begrenzt.

Selbstverständlich können auch bei der in der Fig. 4 dargestellten Anlage mehrere Wärmeverbraucher oder Wärmeverbraucher-Gruppen, deren Wärmeverbrauch separat zu messen ist, in analoger Weise an die Leitungen 103 und 107 angeschlossen werden.

Die in der Fig. 5 dargestellte Anlage weist eine Wärmequelle 201, eine Speise-Vorlauf-Leitung 203, eine in diese eingeschaltete Pumpe 205 und eine Sammel-Rücklauf-Leitung 207 auf. Ein Wärmeverbraucher 209 oder eine Wärmeverbraucher-Gruppe ist durch eine Vorlauf-Leitung 211 und eine Rücklauf-Leitung 213 mit der Leitung 203 bzw. 207 verbunden. In die Vorlauf-Leitung 211 ist ein Temperaturfühler 215 zum Messen der Vorlauf-Temperatur $\vartheta_V$ und in die Rücklauf-Leitung 213 ein Temperaturfühler 221 zum Messen der Hucklauf-Temperatur $\vartheta_R$ eingeschaltet. In die Rücklauf- Leitung 213 sind nach dem Temperaturfühler 221 ein Durchflussmesser 223 und ein Dreiweg-Regulier-Ventil 217 mit einem einen Elektromotor aufweisenden Betatigungsorgan 219 eingeschaltet. In die Vorlauf-Leitung 211 ist zwischen den Temperaturfühler 215 und den Wärmeverbraucher 209 eine Pumpe 271 eingeschaltet. Eine Verbindungs-Leitung 273 verbindet den sich zwischen dem Temperaturfühler 221 und dem Durchflussmesser 223 vorhandenen Abschnitt der Rücklauf-Leitung 213 mit der Vorlauf-Leitung 211, und zwar mit deren sich zwischen dem Temperaturfühler 215 und der Pumpe 271 befindenden Abschnitt. Dieser letztgenannte Leitungs-Abschnitt ist ferner durch eine Verbindungs-Leitung 275 mit dem Dreiweg-Regulier-Ventil 21 bunden. In gewisse Leitungs-Abschnitte könner nötigenfalls noch Drosseln eingeschaltet sein. Das den Geräten 31 und 131 entsprechende Gerät 231 ist durch elektrische Leitungen mit den Temperaturfühlern 215 und 221, dem Durchflussmesser 223 und dem Luft-Temperaturfühler 233 verbunden.

Beim Betrieb der Anlage erzeugt die Pumpe 205 dauernd eine Kreislauf-Strömung des in der Wärmequelle 201 erwärmten Wassers. Ferner hält die Pumpe 271 unabhängig von der Stellung des Ventils 217 dauernd einen etwa konstanten Wasserstrom durch den Wärmeverbraucher 209 aufrecht. Das Wasser strömt also in den durch Pfeile angedeuteten Richtungen durch die Leitungen, wobei bei bestimmten Ventil-Stellungen die Strömung in gewissen Leitungsabschnitten gesperrt wird. Der Wasserzufluss von der Speise-Vorlauf-Leitung 203 zum Wärmeverbraucher-Kreislauf ist dabei gleich dem Wasser-Durchfluss q durch den Durchflussmesser 223 und kann mittels des Dreiweg-Regulier-Ventils 217 in allfälliger Zusammenwirkung mit den eventuell noch vorhandenen Drosseln eingestellt werden. Damit kann auch bei dieser Variante der Heiz-Anlage der Wärmefluss s, d.h. der Wärmetransport von der Wärmequelle 201 zum Wärmeverbraucher 209 mittels des Dreiweg-Regulier-Ventils 217 eingestellt werden. Diese Einstellung des Wärmeverbrauchs wird in der Heizungstechnik als Einspritz-Regulierung bezeichnet.

Der Wärmeverbrauch wird mittels des Geräts 231 gemessen. Ferner regelt das Gerät 231 den Wärmefluss s in analoger Weise, wie es für das Gerät 31 beschrieben wurde. Insbesondere werden der Wasser-Durchfluss q durch den Durchflussmesser 221 und damit der Wärmefluss s zeitweise vollständig unterbrochen, d.h. intermittierend gemacht, bzw. begrenzt, wenn sich aufgrund der Regelung ein Betriebszustand ergäbe, bei dem der Wasser-Durchfluss q bzw. die Temperaturdifferenz zwischen den Messwerten der Vor- und Rücklauf-Temperatur unter einen vorgegebenen Grenzwert absänken.

Selbstverständlich kann die Steuerung oder Regelung des Wärmeflusses auch bei den Anlagen der in den Fig. 4 und 5 dargestellten Arten in analoger Weise variiert werden, wie es für die in der Fig. 1 dargestellten Anlage erläutert wurde. Bei den Anlagen der in den Fig. 4 und 5 dargestellten Arten beständen aber noch andere Regelmöglichkeiten. Man könnte nämlich in die Vorlauf-Leitungen 111 bzw. 211 zwischen den Einmündungen der Verbindungs-Leitungen 173 bzw. 273 und den Wärmeverbrauchern 109 bzw. 209 zusätzlich noch einen andern Temperaturfühler einschalten.

Mit diesem Temperaturfühler könnte die Gemisch-Vorlauf-Temperatur des den Wärmeverbrauchern zugeführten Wassergemisches gemessen werden. Der im Gerät 231 vorhandene Prozess-Rechner könnte in diesem Fall derart beschaffen, d.h. programmiert sein, dass er in Abhängigkeit von der mittels des Temperaturfühlers 233 gemessenen Luft-Temperatur einen Sollwert für die Gemisch-Vorlauf-Temperatur festlegt. Des weitern könnte der Wasser-Durchfluss q derart geregelt werden, dass der Istwert der Gemisch-Vorlauf-Temperatur gleich dem errechneten Sollwert wird. Auch bei einer solchen Regelung würden der Wasserzufluss von der Speise-Vorlauf-Leitung 203 und der Wasser-Durchfluss q wiederum zeitweise unterbrochen, bzw. begrenzt, wenn sich aufgrund der Regelung Durchflüsse bzw. Temperaturdifferenzen ergäben, die unterhalb der vorgegebenen Grenzwerte zu liegen kämen.

Schliesslich sei noch erwähnt, dass man anstelle von Wasser eventuell auch ein anderes Fluid für den Wärmetransport verwenden könnte.

## Patentansprüche

1. Anlage zum Transport von Wärme mittels eines Fluides mit mindestens einer Wärmequelle (1), die über Leitungen (3, 7, 11, 13) mit mindestens einem Wärmeverbraucher (9) verbunden ist, einem in die Leitungen (11, 13) eingeschalteten Ventil (17) zum Einstellen der zu transportierenden Wärme, zwei Temperaturfühlern (15, 21), von denen einer in eine das Fluid zum Wärmeverbraucher (9) zuführende Leitung (3, 11) und einer in eine das Fluid vom Wärmeverbraucher (9) wegführende Leitung (13) eingeschaltet ist, einem in eine dieser Leitungen eingeschalteten Durchflussmesser (23) und mit den beiden Temperaturfühlern (15, 21), dem Durchflussmesser (23) und dem Ventil (17) verbundenen Mess- und Steuermitteln (31, 33), um aus den von den beiden temperaturfühlern gemessenen Temperaturen und Durchflüssen die transportierte Wärme zu bestimmen und den Wärmefluss (s) von der Wärmequelle (1) zum Wärmeverbraucher (9) zu unterbrechen, wenn der vom Durchflussmesser (23) gemessene Durchfluss (q) in einem Betriebszustand auf einen unteren Grenzwert ($q_{min}$) sinkt, dadurch gekennzeichnet, dass das genannte Ventil (17) einerseits zum stetigen Verändern des Wärmeflusses (s) und anderseits zum Unterbrechen des Wärmeflusses (s) dient, wenn der genannte Betriebszustand auftritt, und dass die Mess- und Steuermittel (31, 33) derart ausgebildet sind, dass sie einen Sollwert der durch den Meßwert eines außerhalb der Leitungen angeordneten, zusätzlichen Temperaturfühlers (33) veränderbar ist, für den genannten Wärmefluss (s) festlegen und daß sie aus den Messwerten der beiden Temperaturfühler (15, 21) und des Durchflussmessers (23) den Istwert des Wärmeflusses (s) ermitteln und mittels des Ventils (17) regeln.

2. Anlage nach Anspruch 1, dadurch gekennzeichnet, dass die Mess- und Steuermittel (31, 33) Bestandteile aufweisen, um einen intermittierenden Wärmefluss (s) von der Wärmequelle (1) zum Wärmeverbraucher (9) zu bewirken, wenn der momentan zuzuführende, mittlere Wärmefluss einen Zustand ergäbe, bei dem der Durchfluss-Grenzwert ($q_{min}$) unterschritten würde.

3. Anlage nach einem der Ansprüche 1 oder 2, dadurch gekennzeichnet, dass das Ventil (17) und der Durchflussmesser (23) derart angeordnet sind, dass der Fluidzufluss von der Wärmequelle (1) zum Wärmeverbraucher (9) bei jeder Einstellung des Ventils (17) gleich dem Durchfluss (q) durch den Durchflussmesser (23) ist und der letztere beim Unterbruch des Wärmeflusses (s) unterbrochen wird.

4. Anlage nach einem der Ansprüche 1 bis 3, dadurch gekennzeichnet, dass das Ventil (17, 117) einen zwischen dem einen (15, 115) der beiden Temperaturfühler und dem Wärmeverbraucher (9, 109) in diejenige Leitung (11, 111) eingeschalteten Durchgang aufweist, durch die das Fluid von der Wärmequelle (1, 101) zum Wärmeverbraucher (9, 109) zugeleitet wird.

5. Anlage nach einem der Ansprüche 1 oder 2, dadurch gekennzeichnet, dass das Ventil ein Mehrweg-Ventil (117, 217) ist und einen Anschluss aufweist, der zusammen mit einer Leitung (173, 275), die das Fluid zum Wärmeverbraucher (109, 209) zuführende Leitung (111, 211) und die das Fluid vom Wärmeverbraucher (109, 209) wegführende Leitung (113, 213) miteinander verbindet, so dass entweder vom Wärmeverbraucher (109) zurückströmendes Fluid diesem ganz oder teilweise nochmals zugeführt werden kann, ohne dass es dabei den Durchflussmesser (1 23) durchfliesst, oder von der Wärmequelle (201) herkommendes Fluid, ohne dass es den Wärmeverbraucher (209) und den Durchflussmesser (223) durchfliesst, ganz oder teilweise wieder zur Wärmequelle (201) zurückgeleitet werden kann.

6. Anlage nach Anspruch 5, dadurch gekennzeichnet, dass sich die zwei Temperaturfühler (115, 121, 215, 221) strömungsmässig vor der jeweiligen Leitungsstelle befinden, bei der die die Wärmequelle (101, 201) mit dem Wärmeverbraucher (109, 209) verbindenden Leitungen (111, 113, 211, 213) über den genannten Anschluss des Mehrweg-Ventils (117, 217) miteinander verbunden sind.

7. Anlage nach einem der Ansprüche 1 bis 6, dadurch gekennzeichnet, dass die Mess- und Steuermittel (31, 33) derart ausgebildet sind, dass der genannte Wärmefluss (s) unterbrochen wird, wenn der Durchfluss (q) durch den Durchflussmesser (23) auf einen mindestens 1% von dessen Nominal-Durchfluss betragenden Grenzwert absinkt.

8. Anlage nach einem der Ansprüche 1 bis 7, dadurch gekennzeichnet, dass die Mess- und Steuermittel (31, 33) derart ausgebildet sind, dass der genannte Wärmefluss (s) unterbrochen wird, wenn der Durchfluss (q) durch den Durchflussmesser (23) auf einen höchstens 10% des Nominal- Durchflusses des Durchflussmessers (23) betragenden G renzwert absinkt.

9. Anlage nach einem der Ansprüche 1 bis 8, dadurch gekennzeichnet, dass das die Mess- und Steuermittel (31, 33) derart a usgebildet sind, dass der Durchfluss (q) durch den Durchflussmesser (23) durch Steuern des Ventils (1 7) begrenzt wird, wenn die Differenz ($\Delta 9$) zwischen den von den beiden Temperaturfühlen (15, 21) gemessenen Temperaturen auf einen unteren Grenzwert ($\Delta 9_{min}$) absinkt, der mindestens 1°C und höchstens 5°C beträgt.

**Revendications**

1. Dispositif de transport de chaleur au moyen d'un fluide, comportant au moins une source de chaleur (1) reliée par des canalisations (3, 7, 11, 13) à au moins un appareil de consommation de chaleur (9), une vanne (17) montée sur les canalisations (11, 13) pour le réglage de la chaleur à transporter, deux sondes de température (15, 21), disposées l'une sur une canalisation (3, 11) qui amène le fluide à l'appareil de consommation (9) et l'autre sur la canalisation (13) qui évacue le fluide hors de l'appareil de consommation (9), un débit-mètre (23) monté sur l'une de ces canalisations, et des moyens de mesure et de commande (31, 33), reliés aux deux sondes de température (15, 21), au débit-mètre (23) et à la vanne (17), pour déterminer la chaleur transportée, d'après les valeurs des températures mesurées par les deux sondes de température et les valeurs mesurées des debits, afin d'interrompre le flux thermique (s) allant de la source de chaleur (1) à l'appareil de consommation (9), lorsque la valeur (q) du débit mesurée par le débit-mètre (23) tombe en-dessous d'une valeur-limite ($q_{min}$) dans un régime de fonctionnement donne, caractérisé en ce que la vanne précitée (17) sert d'une part à assurer la variation continue du flux thermique (s) et d'autre part à interrompre le flux thermique (s) en présence du régime de fonctionnement précité, et en ce que les moyens de mesure et de commande (31,33) sont agencés de manière à fixer pour le flux thermique précité (s) une valeur de consigne qui est variable, suivant la valeur mesurée par une sonde de température supplémentaire (33), disposée en dehors des canalisations du système, et pour déterminer la valeur instantanée du flux thermique (s), d'après les valeurs mesurées par les deux sondes de température (15, 21) et par le débit-mètre (23), afin d'assurer le réglage du flux thermique au moyen de la vanne (17).

2. Dispositif conforme à la revendication 1, caractérisé en ce que les moyens de mesure et de commande (33) comportent des organes pour assurer l'émission d'un flux thermique intermittent (s) de la source thermique (1) vers l'appareil de consommation thermique (9), lorsque la valeur moyenne du flux thermique à laisser passer momentanément correspond à un régime de fonctionnement qui se situerait en-dessous de la valeur-limite ($q_{min}$) fixée pour le débit.

3. Dispositif conforme à l'une des revendications 1 ou 2, caractérisé en ce que la vanne (17) et le débit-mètre (23) sont agencés de manière telle que le débit de fluide allant de la source de chaleur (1) à l'appareil de consommation de chaleur (9), pour toute position de réglage de la vanne (17), soit égal à la valeur (q) du débit à travers le débit-mètre (23), ce dernier débit se trouvant interrompu lorsque le flux thermique (s) est interrompu.

4. Dispositif conforme à l'une des revendications 1 à 3, caractérisé en ce que la vanne (17, 117) présente un passage ménagé entre l'une (15, 115) des deux sondes de température et l'appareil de consommation thermique (9, 109), sur la canalisation (11, 111) dans laquelle chemine le fluide, pour aller de la source de chaleur (1, 101) à l'appareil de consommation de chaleur (9, 109).

5. Dispositif conforme à l'une des revendications 1 ou 2, caractérisé en ce que la vanne est une vanne à voies multiples (117, 217) et assure le raccordement entre la canalisation (111, 211) qui amène le fluide à l'appareil de consommation de chaleur (109, 209) en combinaison avec une canalisation (173, 275), et la canalisation (113, 213) par laquelle le fluide sort de l'appareil de consommation de chaleur (109, 209), de telle sorte que, ou bien le fluide revenant de l'appareil de consommation de chaleur (109) peut passer en totalité ou en partie à travers la vanne précitée, sans traverser pour ce faire le débit-mètre (123), ou bien le fluide provenant de la source de chaleur (201) peut revenir à la source de chaleur (201) sans traverser l'appareil de consommation de chaleur (209) et le débit-mètre (223).

6. Dispositif conforme à la revendication 5, caractérisé en ce que les deux sondes de température (115, 121, 215, 221) sont situées chacune, par rapport au sens de l'écoulement, en amont de l'endroit où les canalisations (111, 113, 211, 213) reliant la source de chaleur (101, 201) à l'appareil de consommation de chaleur (109, 209) sont raccordées entre elles par l'intermédiaire de la vanne à plusieurs voies précitée (117, 217).

7. Dispositif conforme à l'une des revendications 1 à 6, caractérisé en ce que les moyens de mesure et de commande (31,33) sont agencés de manière à provoquer l'interruption du flux thermique précité (s) lorsque la valeur (q) du débit traversant le débit-mètre (23) tombe en-dessous d'une valeur-limite au moins égale à 1% du débit nominal de ce débit-mètre.

8. Dispositif conforme à l'une des revendications 1 à 7, caractérisé en ce que les moyens de mesure et de commande (31,33) sont agencés de manière à provoquer l'interruption du flux thermique précité (s) lorsque la valeur (q) du débit traversant le débit-mètre (23) tombe en-dessous d'une valeur-limite au plus égale à 10% du débit nominal de ce débit-mètre.

9. Dispositif conforme à l'une des revendications 1 à 8, caractérisé en ce que les moyens de mesure et de commande (31, 33) sont agencés de manière à limiter la valeur (q) du débit traversant le débit-mètre (23) en agissant sur la vanne (17) lorsque la différence ($\Delta \theta$) entre les températures mesurées par les deux sondes de température (15, 21) tombe en-dessous d'une valeur-limite inférieure ($\Delta \theta_{min}$) égale au moins à 1°C et au plus à 5°C.

## Claims

1. Installation for the transport of heat by means of a fluid with at least one heat source (1), which is connected through ducts (3, 7, 11, 13) with at least one heat sink (9), a valve (17) interposed in the ducts (11, 13) for the setting of the heat to be transported, two temperature sensors (15, 21), of which one is interposed in a duct (3, 11) conducting the fluid to the heat sink (9) and one is interposed in a duct (13) conducting the fluid away from the heat sink (9), a throughflow meter (23) interposed in one of these ducts, and measuring and control means (31, 33), which are connected with both the temperature sensors (15, 21), the throughflow meter (23) and the valve (17), to determine the transported heat from the temperatures measured by both the temperature sensors and the throughflows and to interrupt the heat flow(s) from the heat source (1) to the heat sink (9) when the throughflow (9) measured by the throughflow meter (23) falls to a lower limit value ($q_{min}$) in an operational state, characterised thereby, that the named valve (17) serves on the one hand for the continuous variation of the heat flow(s) and on the other hand for the interruption of the heat flow(s) when the named operational state occurs and that the measuring and control means (31, 33) are constructed in such a manner that they define a target value, which is variable by the measurement value of an additional temperature sensor (33) arranged outside the ducts, for the named heat flow(s) and that they determine the actual value of the heat flow(s) from the measurement values of both the temperature sensors (15, 21) and the throughflow meter (23) and regulate it by means of the valve (17).

2. Installation according to claim 1, characterised thereby, that the measuring and control means (31, 33) display components to cause an intermittent heat flow(s) from the heat source (1) to the heat sink (9) when the mean heat flow to be supplied instantaneously would result in a state, in which the throughflow limit value ($9_{min}$) would be fallen below.

3. Installation according to one of the claims 1 or 2, characterised thereby, that the valve (17) and the throughflow meter (23) are arranged in such a manner that the fluid flow from the heat source (1) to the heat sink (9) is equal to the throughflow (q) through the throughflow meter (23) for every setting of the valve (17) and the throughflow is interrupted on interruption of the heat flow(s).

4. Installation according to one of the claims 1 to 3, characterised thereby, that the valve (17, 117) displays a passage interposed in that duct (11, 111), through which the fluid is conducted from the heat source (1, 101) to the heat sink (9, 109), between the one (15, 115) of both the temperature sensors and the heat sink (9, 109).

5. Installation according to one of the claims 1 or 2, characterised thereby, that the valve is a multi-way valve (117, 217) and displays a connection which together with a duct (173, 217) connects together the duct (111, 211) conducting the fluid to the heat sink (109, 209) and the duct (113, 213) condcuting the fluid away from the heat sink (109, 209) so that either fluid flowing back form the heat sink (109) can be wholly or partially conducted to this once again without in that case flowing through the throughflow meter (123) or fluid coming from the heat source (201) can be wholly or partially conducted back to the heat source (201) without flowing through the heat sink (209) and the throughflow meter (223).

6. Installation according to claim 5, characterised thereby, that the two temperature sensors (115, 121, 215, 221) are each disposed in terms of flow in front of a respective one of those duct places, at which the ducts (111, 113, 211, 213), which connect the heat source (101, 201) with the heat sink (109, 209), are connected together through the named connection of the multi-way valve (117, 217).

7. Installation according to one of the claims 1 to 6, characterised thereby, that the measuring and control means (31, 33) are constructed in such a manner that the named heat flow (s) is interrupted when the throughflow (q) through the throughflow meter (23) falls to a limit value amounting to at least 1% of its nominal throughflow.

8. Installation according to one of the claims 1 to 7, characterised thereby, that the measuring and control means (31, 33) are constructed in such a manner that the named heat flow (s) is interrupted when the throughflow (9) through the throughflow meter (23) falls to a limit value amounting to at most l0% of the nominal throughflow of the throughflow meter (23).

9. Installation according to one of the claims 1 to 8, characterised thereby, that the measuring and control means (31, 33) are constructed in such a manner that the throughflow (q) through the throughflow meter is limited by controlling of the valve (17) when the difference ($\Delta \vartheta$) between the temperature measured by both the temperature sensors (15, 21) falls to a lower limit value ($\Delta \vartheta_{min}$), which amounts to at least 1°C and at most 5°C.

Fig. 1

Fig. 2

Fig. 3

Fig. 4

Fig. 5